# FASCICULE DE BREVET EUROPEEN

(11) **EP 0 683 867 B1**
(45) Date de publication et mention de la délivrance du brevet: **13.10.1999**
(21) Numéro de dépôt: 95901479.6
(22) Date de dépôt: 10.11.1994
(51) Int. Cl.: F16D 13/72

(54) **MODULE D'EMBRAYAGE A VOLANT MUNI D'AILETTES DE VENTILATION**
KUPPLUNGSEINHEIT MITTELS LÜFTUNGSFLÜGELN AM SCHWUNGRAD GEHALTEN
CLUTCH MODULE HAVING A FLYWHEEL PROVIDED WITH COOLING FINS

(30) Priorité: 10.11.1993 FR 9313431
(43) Date de publication de la demande: 29.11.1995
(73) Titulaire: VALEO, 75017 Paris (FR)
(72) Inventeur: SEVENNEC, Yvon +di, . (FR); VIOLA, Paolo, F-75007 Paris (FR)
(74) Mandataire: Gamonal, Didier
(86) Numéro de dépôt international: FR9401319
(87) Numéro de publication internationale: WO9513486

(56) Documents cités:
- EP-A- 0 075 387
- WO-A-91/02909
- DE-B- 1 066 876
- GB-A- 853 356

## Description

L'invention concerne les modules d'embrayage, notamment pour véhicules automobiles comme décrit dans le document FR-A-1 524 350 conforme au préambule de la revendication 1.

Ainsi qu'on le sait, un module d'embrayage comporte, de manière unitaire, un mécanisme, une friction d'embrayage et un volant, le mécanisme étant lui-même formé d'un couvercle, par lequel il est rapporté sur le volant, d'un diaphragme, qui prend appui sur le couvercle, et d'un plateau de pression, sur lequel porte ce diaphragme.

Enserré entre le plateau de pression et le volant, le volume où interviennent les garnitures de frottement du disque de friction que comporte la friction d'embrayage est usuellement très confiné, et, de manière préjudiciable, il peut en résulter un risque de surchauffe pour l'un et/ou l'autre des constituants concernés.

L'invention a pour objet un module d'embrayage de ce genre dans lequel, pour diminuer ce risque, la ventilation est améliorée, et qui présente en outre d'autres avantages.

Ce problème est résolu par les parties caractérisantes des revendications 1 et 2.

Ces ailettes de ventilation intervenant au droit des garnitures de frottement du disque de friction de la friction d'embrayage, ces garnitures de frottement, et les surfaces de frottement avec lesquelles elles coopèrent, se trouvent avantageusement balayées par une circulation d'air, qui s'établit en service entre les ailettes de ventilation et des évidements prévus par ailleurs à cet effet dans le volant, et qui, par évacuation des calories, est particulièrement favorable au refroidissement de l'ensemble.

Grâce aux caractéristiques de la revendication 2, cette ailette de ventilation est ainsi avantageusement à même d'assurer une limitation de la course axiale du plateau de pression par rapport au volant, en offrant axialement une butée au plateau de pression, ce qui, en limitant corollairement l'usure possible pour les garnitures de frottement du disque de friction de la friction d'embrayage, évite avantageusement tout risque de détérioration du plateau de pression et/ou du volant par les rivets assurant de manière usuelle la fixation de ces garnitures de frottement sur le voile qui les porte.

Les caractéristiques et avantages de l'invention ressortiront d'ailleurs de la description qui va suivre, à titre d'exemple, en référence aux dessins schématiques annexés sur lesquels :
- la figure 1 est une vue en coupe axiale d'un module d'embrayage suivant l'invention, suivant la ligne brisée I-I de la figure 2 ;
- la figure 2 en est, avec un arrachement local ne laissant pour l'essentiel substituer que le plateau de pression et le volant, une vue en plan, suivant la flèche II de la figure 1 ;
- la figure 3 en est une vue partielle en coupe axiale, suivant la ligne III-III de la figure 2 ;
- la figure 4 en est, à échelle supérieure, une autre vue partielle en coupe axiale, suivant la ligne IV-IV de la figure 2.

Tel qu'illustré sur ces figures, le module d'embrayage 10 suivant l'invention forme un ensemble unitaire et comporte, successivement axialement, de manière connue en soi, un mécanisme 11, une friction d'embrayage 12, et un volant 13.

Le mécanisme 11 comporte, lui-même, successivement axialement, un couvercle 14, qui, tel que décrit ultérieurement, est assujetti au volant 13, un diaphragme 15, qui prend appui sur le couvercle 14, et un plateau de pression 16, sur lequel porte le diaphragme 15. Ici, le mécanisme 11 est de type "poussé".

Le diaphragme 15 prend donc appui sur le couvercle 14 du côté de la périphérie de plus petit diamètre de sa partie périphérique 18 formant rondelle Belleville, cependant qu'il porte sur le plateau de pression 16 du côté de la périphérie de plus grand diamètre de celle-ci.

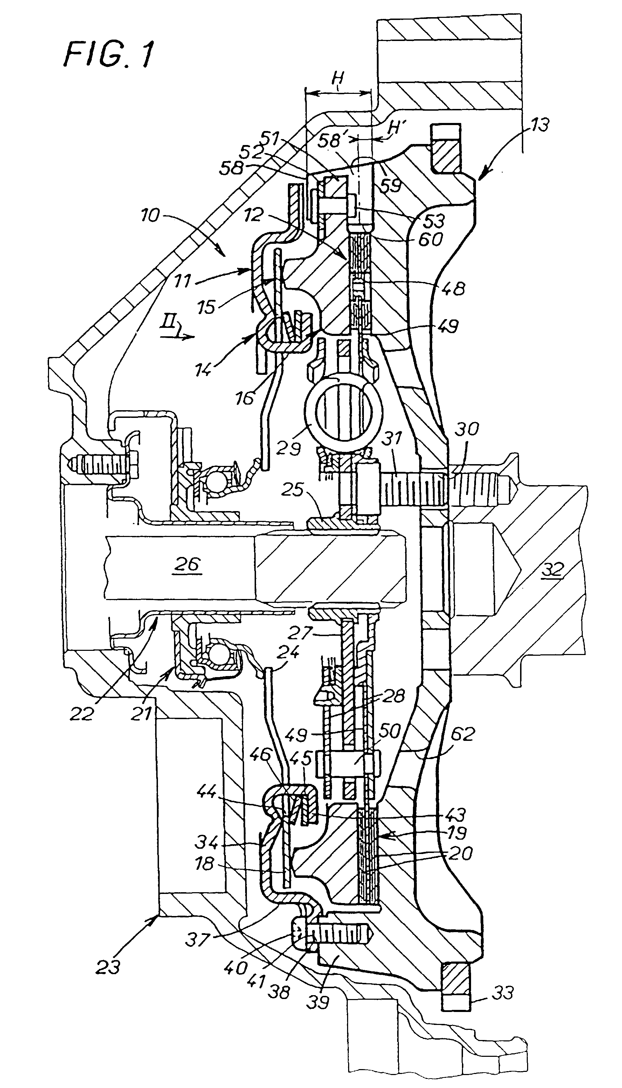

De manière connue en soi, le plateau de pression 16 présente un bossage annulaire fractionné (non référencé à la figure 1) pour appui de ladite portée périphérique 18 du diaphragme.

Sous la sollicitation du diaphragme 15, le plateau de pression 16 est apte à serrer contre le volant 13 les garnitures de frottement 20 du disque de friction 19 que comporte la friction d'embrayage 12.

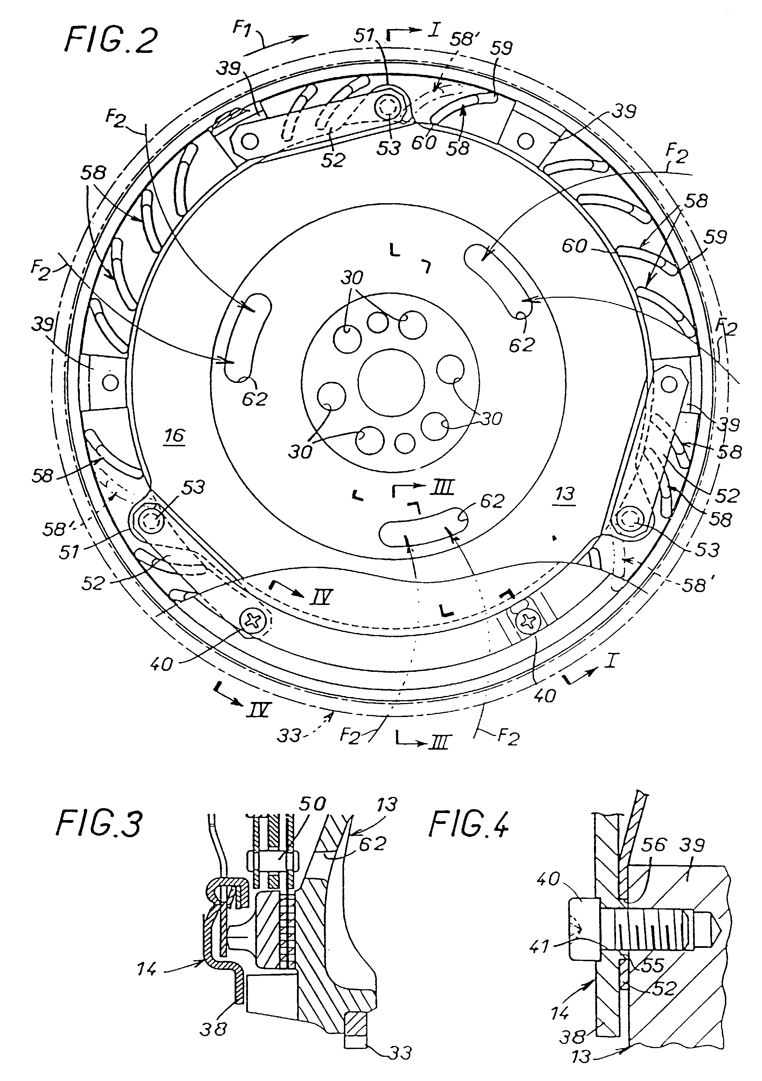

Pour le desserrage de ces garnitures de frottement 20, il est prévu, tel que représenté en traits fins sur la figure 2, une butée de débrayage 21, qui, montée coulissante axialement sur un manchon 22 solidaire du carter 23 de l'ensemble, est apte à agir en poussée sur les doigts 24 que forme la partie centrale du diaphragme 15.

Ici, la friction d'embrayage 12 est à moyeu amortisseur. Outre un moyeu 25, par lequel elle est adaptée à être calée en rotation sur un arbre mené 26, en l'espèce l'arbre d'entrée d'une boîte de vitesses, et un voile de moyeu 27, qui est solidaire, ici par sertissage, du moyeu 25, elle comporte deux rondelles de guidage 28, qui s'étendent chacune respectivement de part et d'autre du voile de moyeu 27, et dont est solidaire le disque de friction 19, avec, interposés circonférentiellement entre le voile de moyeu 27 et ces rondelles de guidage 28, des moyens élastiques à action circonférentielle, ici des ressorts 29 du type ressort à boudin, dont chacun est individuellement logé pour partie dans une fenêtre du voile de moyeu 27 et pour partie dans des fenêtres des rondelles de guidage 28.

Ici, les garnitures de frottement 20 du disque de friction 19 sont rapportées par des rivets 48 sur le voile 49 qui les porte, et ce voile 49 est solidarisé à l'une des rondelles de guidage 28 par des colonnettes 50 qui solidarisent l'une à l'autre ces rondelles de guidage 28.

Ici le volant 13 est d'un seul tenant en étant en matière moulable, ici en fonte, tout comme le plateau de pression 16.

Dans sa partie centrale, il comporte plusieurs perçages 30, répartis circulairement, pour le passage de vis de fixation 31 propres à permettre de rapporter l'ensemble sur un arbre menant 32, en l'espèce le vilebrequin d'un moteur à combustion interne.

A sa périphérie, il porte une couronne de démarreur 33. Ici, le couvercle 14 du mécanisme 11 est en tôle emboutie et il comporte, transversalement, un fond 34, qui, s'étendant annulairement, forme ici par emboutissage un cordon 35 par lequel il fournit un appui primaire à la partie périphérique 18 formant rondelle Belleville du diaphragme 15.

Ici, pour un assujettissement pivotant du diaphragme 15 au couvercle 14, le couvercle 14 forme des pattes 43, qui, issues d'un seul tenant de son fond 34, par découpe et pliage de la tôle initiale, traversent le diaphragme 15 à la faveur d'évidements 44 présents à la racine de ses doigts 24, et fournissent un appui secondaire à la partie périphérique 18 formant rondelle Belleville de ce diaphragme 15, au droit du cordon 35 du couvercle 14, et par l'intermédiaire, ici, d'une rondelle entretoise 45 et d'une rondelle élastique à élasticité axiale 46, ici de forme générale tronconique.

Le couvercle 14 comporte, en outre, périphériquement, une paroi latérale 37, par laquelle il contourne le diaphragme 15, et qui est ici globalement cylindrique, avec, en section transversale, un contour circulaire.

Le couvercle 14 comporte, ensuite, transversalement, un rebord 38, qui s'étend radialement en direction opposée au fond 34, et par lequel il prend axialement appui sur le volant 13.

Ici, le volant 13 présente, de place en place, au voisinage de sa périphérie de plus grand diamètre, des bossages 39, qui s'étendent axialement en saillie d'un seul tenant avec lui, et sur lequel le couvercle 14 prend axialement appui par son rebord 38, en étant ici rapporté sur ces bossages 39 par des vis 40 traversant des perçages 41 prévus à cet effet dans ce rebord 38.

Ici, les bossages 39 sont au nombre de six. Ici, le plateau de pression 16 présente, radialement, de place en place à sa périphérie de plus grand diamètre, des pattes 51 que des languettes 52 relient au couvercle 14 pour en assurer la solidarisation en rotation à celui-ci tout en en permettant un certain débattement axial par rapport à lui.

Ici, trois pattes 51 sont prévues, chacune entre deux bossages 39 du volant 13, et les languettes 52 s'étendent tangentiellement entre elles et le rebord 38 du couvercle 14.

Ici, les languettes 52 sont attelées par un rivet 53 à une patte 51 du plateau de pression 16 à l'une de leurs extrémités, et, à l'autre de celles-ci, elles sont attelées au rebord 38 du couvercle 14 par une vis 40 solidarisant ce couvercle 14 à un bossage 39 du volant 13.

Ici, figure 4, le rebord 38 du couvercle 14 forme, par emboutissage, autour de chacun des perçages 41 correspondants, du côté des languettes 52, une cheminée 55, qui est engagée dans un perçage 56 de ces languettes 52, et qui, ainsi, assure le centrage de celles-ci et leur fixation.

Le volant 13 porte, axialement en saillie, sur sa face frontale, c'est-à-dire sur sa surface tournée vers le plateau de pression 16, au voisinage de sa périphérie de plus grand diamètre, des ailettes de ventilation 58.

Ces ailettes de ventilation 58 s'étendent radialement au-delà du disque de friction 19 de la friction d'embrayage 12, au droit des garnitures de frottement 20 de ce disque de friction 19.

Ici, elles sont circulairement implantées entre les bossages 39 du volant 13, et elles s'étendent axialement jusqu'au voisinage immédiat du rebord 38 du couvercle 14.

Entre les bossages 39 du volant 13 entre lesquels ne s'étend aucune patte 51 du plateau de pression 16, il y a, ici, quatre ailettes de ventilation 58, ayant toutes axialement une même hauteur H à compter du volant 13.

Entre les bossages 39 du volant 13 entre lesquels s'étend une patte 51 du plateau de pression 16, le nombre d'ailettes de ventilation 58 est, ici, réduit à trois, tel que représenté en trait continu sur les figures, pour laisser un libre passage à une telle patte 51.

Ici, suivant l'invention, les ailettes de ventilation 58 sont dans ce cas circulairement implantées de part et d'autre d'une telle patte 51, à raison de deux d'un premier côté circonférentiel de celle-ci et d'une du côté circonférentiel opposé. Mais, en variante, suivant l'invention, et tel que schématisé en traits interrompus sur les figures 1 et 2, au moins une ailette de ventilation 58' est au moins pour partie axialement implantée au droit d'une au moins des pattes 51 du plateau de pression 16, et, ici, au droit de chacune de celles-ci.

Cette ailette de ventilation 58' a, axialement, une hauteur H' inférieure à celle, H, des ailettes de ventilation 58, pour s'insérer sous la patte 51 correspondante du plateau de pression 16, en contournant, de préférence, le rivet 53 correspondant.

A l'exception, éventuellement, de cette ailette de ventilation 58', les ailettes de ventilation 58 présentes entre deux bossages 39 du volant 13 sont circulairement régulièrement espacées les unes des autres.

Ici, ces ailettes de ventilation 58, 58' s'étendent toutes en oblique dans le même sens par rapport à un plan radial passant par leur zone médiane.

Autrement dit, leur extrémité d'attaque 59, qui, pour toutes, se trouve sur une même circonférence de l'ensemble, est circulairement décalée par rapport à leur extrémité de fuite 60, qui se trouve elle-même sur une même circonférence de l'ensemble de rayon différent de celui de la circonférence précédente.

Si, par exemple, le sens de rotation du module d'embrayage 10 en service pour un fonctionnement en marche avant du véhicule concerné est le sens horaire représenté par la flèche Fl sur la figure 2, l'extrémité d'attaque 59 des ailettes de ventilation 58, 58' est celle s'étendant sur la circonférence de plus grand diamètre, cependant que leur extrémité de fuite 60 est celle s'étendant sur la circonférence de diamètre inférieur.

Ici, entre, d'une part, les perçages 30 qu'il présente pour sa fixation à l'arbre menant 32, et, plus précisément, pour le passage des vis de fixation 31 propres à cette fixation, et, d'autre part, les ailettes de ventilation 58, 58' qu'il porte, le volant 13 comporte des évidements 62, pour faciliter une circulation d'air, qui, globalement, va, radialement, en fonctionnement, de l'extérieur vers l'intérieur, à travers, successivement, les canaux délimités entre elles par les ailettes de ventilation 58, 58' et les évidements 62, tel que schématisé par des flèches F2 sur la figure 2.

Ici, trois évidements 62, répartis circulairement, sont prévus, et ils sont tous allongés en boutonnière suivant une même circonférence de l'ensemble.

Bien entendu, le fractionnement du bossage précité du plateau de pression facilite la circulation de l'air.

Bien entendu, la présente invention ne se limite pas à la forme de réalisation décrite et représentée, mais englobe toute variante d'exécution dans le cadre des revendications.

En particulier, au lieu d'être d'un seul tenant, le volant pourrait être en deux parties.

En outre, au lieu de mettre en oeuvre des pattes venues du couvercle, les moyens d'assemblage assujettissant de manière pivotante le diaphragme à ce couvercle peuvent mettre en oeuvre des colonnettes, comme décrit par exemple dans le document FR-A-1 524 350 (US-A-3,499,512).

## Revendications

1. Module d'embrayage du genre comportant un mécanisme (11), une friction d'embrayage (12) et un volant (13), ledit mécanisme (11) comportant lui-même un couvercle (14), par lequel il est rapporté sur le volant (13), un diaphragme (15), qui prend appui sur le couvercle (14), et un plateau de pression (16), sur lequel porte le diaphragme (15), dans lequel le plateau de pression (16) présente radialement des pattes (51) que des languettes (52) relient au couvercle (14) pour en assurer la solidarisation en rotation à celui-ci tout en en permettant un certain débattement axial par rapport à lui, caractérisé en ce que, au voisinage de sa périphérie de plus grand diamètre, le volant (13) porte axialement en saillie, sur sa surface tournée vers le plateau de pression (16), des ailettes de ventilation (58,58'), en ce que les ailettes de ventilation (58,58') s'étendent radialement au-delà du disque de friction (19) de la friction d'embrayage (12), au droit des garnitures de frottement (20) de ce disque de friction (19) et en ce que les ailettes de ventilation (58) portées par le volant (13) sont circulairement implantées de part et d'autre desdites pattes (51).

2. Module d'embrayage du genre comportant un mécanisme (11), une friction d'embrayage (12) et un volant (13), ledit mécanisme (11) comportant lui-même un couvercle (14), par lequel il est rapporté sur le volant (13), un diaphragme (15), qui prend appui sur le couvercle (14), et un plateau de pression (16), sur lequel porte le diaphragme (15) dans lequel le plateau de pression (16) présente radialement des pattes (51) que des languettes (52) relient au couvercle (14) pour en assurer la solidarisation en rotation à celui-ci tout en en permettant un certain débattement axial par rapport à lui, caractérisé en ce que, au voisinage de sa périphérie de plus grand diamètre, le volant (13) porte axialement en saillie, sur sa surface tournée vers le plateau de pression (16), des ailettes de ventilation (58,58'), en ce que les ailettes de ventilation (58,58') s'étendent radialement au-delà du disque de friction (19) de la friction d'embrayage (12), au droit des garnitures de frottement (20) de ce disque de friction (19) et en ce qu'au moins une ailette de ventilation (58') est au moins pour partie axialement implantée au droit d'une au moins desdites pattes (51).

3. Module d'embrayage selon la revendication 2, caractérisé en ce que l'ailette de ventilation (58'), implantée au droit de ladite patte (51), a une hauteur (H') inférieure à la hauteur (H) des autres ailettes de ventilation (58) pour s'insérer sous ladite patte (51).

4. Module d'embrayage selon l'une quelconque des revendications 1 à 3, caractérisé en ce que le couvercle (14) du mécanisme (11) comportant transversalement un rebord (38) par lequel il prend appui axialement sur le volant (13), les ailettes de ventilation (58) portées par ledit volant (13) s'étendent axialement jusqu'au voisinage immédiat dudit rebord (38).

5. Module d'embrayage selon l'une quelconque des revendications 1 à 4, caractérisé en ce que le volant (13) présentant en saillie des bossages (39) sur lesquels le couvercle (14) du mécanisme (11) prend appui axialement par un rebord (38), les ailettes de ventilation (58,58') portées par ledit volant (13) sont circulairement implantées entre lesdits bossages (39) et en ce que les pattes (51) du plateau de pression (16) s'étendent entre les bossages du volant.

6. Module d'embrayage selon l'une quelconque des revendications 1 à 5, caractérisé en ce que les ailettes de ventilation (58,58') portées par le volant (13) s'étendent toutes en oblique dans le même sens par rapport à un plan radial passant par leur zone médiane.

7. Module d'embrayage selon l'une quelconque des revendications 1 à 6, caractérisé en ce que, entre les perçages (30) qu'il présente pour sa fixation sur un arbre menant (32) et les ailettes de ventilation (58,58') qu'il porte, le volant (13) comporte des évidements (62).

8. Module d'embrayage selon la revendication 7, caractérisé en ce que les évidements (62) du volant (13) sont tous allongés en boutonnière suivant une même circonférence.

9. Module d'embrayage selon l'une quelconque des revendications 1 à 8, caractérisé en ce que le couvercle (14) prenant appui axialement par un rebord (38) sur le volant (13), et le plateau de pression (16) étant relié au couvercle (14) par des languettes (52), ledit rebord (38) du couvercle (14) forme autour de chacun des perçages (41) qu'il présente pour sa fixation au volant (13), du côté des languettes (52), une cheminée (55) qui est engagée dans un perçage (56) de ces languettes (52), pour le centrage de celles-ci et leur fixation.

10. Module d'embrayage selon l'une quelconque des revendications 1 à 9, caractérisé en ce que le volant (13) présente centralement plusieurs perçages (30) pour sa fixation à un arbre menant (32).

## Patentansprüche

1. Kupplungsmodul, umfassend einen Mechanismus (11), eine Reibungskupplungsscheibe (12) und ein Schwungrad (13), wobei der besagte Mechanismus (11) selbst einen Deckel (14), durch den er am Schwungrad (13) angefügt ist, eine Membranfeder (15), die auf dem Deckel (14) zur Auflage kommt, und eine Druckplatte (16) umfaßt, auf der die Membranfeder (15) anliegt, wobei die Druckplatte (16) radial Ansätze (51) aufweist, die Zungen (52) mit dem Deckel (14) verbinden, um ihre drehfeste Verbindung mit diesem herbeizuführen und ihr gleichzeitig eine axiale Bewegung im Verhältnis zu diesem zu ermöglichen, **dadurch gekennzeichnet,** daß das Schwungrad (13) in der Nähe seines Umfangs mit größerem Durchmesser axial vorstehend, auf seiner zur Druckplatte (16) gerichteten Fläche, Lüftungsrippen (58, 58') trägt, daß sich die Lüftungsrippen (58, 58') radial jenseits der Reibungsscheibe (19) der Reibungskupplungsscheibe (12) in Höhe der Reibbeläge (20) dieser Reibungsscheibe (19) erstrecken und daß die am Schwungrad (13) angebrachten Lüftungsrippen (58) kreisförmig beiderseits der besagten Ansätze (51) angeordnet sind.

2. Kupplungsmodul, umfassend einen Mechanismus (11), eine Reibungskupplungsscheibe (12) und ein Schwungrad (13), wobei der besagte Mechanismus (11) selbst einen Deckel (14), durch den er am Schwungrad (13) angefügt ist, eine Membranfeder (15), die auf dem Deckel (14) zur Auflage kommt, und eine Druckplatte (16) umfaßt, auf der die Membranfeder (15) anliegt, wobei die Druckplatte (16) radial Ansätze (51) aufweist, die Zungen (52) mit dem Deckel (14) verbinden, um ihre drehfeste Verbindung mit diesem herbeizuführen und ihr gleichzeitig eine axiale Bewegung im Verhältnis zu diesem zu ermöglichen, **dadurch gekennzeichnet,** daß das Schwungrad (13) in der Nähe seines Umfangs mit größerem Durchmesser axial vorstehend, auf seiner zur Druckplatte (16) gerichteten Fläche, Lüftungsrippen (58, 58') trägt, daß sich die Lüftungsrippen (58, 58') radial jenseits der Reibungsscheibe (19) der Reibungskupplungsscheibe (12) in Höhe der Reibbeläge (20) dieser Reibungsscheibe (19) erstrecken und daß wenigstens eine Lüftungsrippe (58') zumindest teilweise axial in Höhe wenigstens eines der besagten Ansätze (51) angeordnet ist.

3. Kupplungsmodul nach Anspruch 2, **dadurch gekennzeichnet,** daß die in Höhe des besagten Ansatzes (51) angeordnete Lüftungsrippe (58') eine Höhe (H') aufweist, die kleiner als die Höhe (H) der anderen Lüftungsrippen (58) ist, um sich unter dem besagten Ansatz (51) einzufügen.

4. Kupplungsmodul nach einem der Ansprüche 1 bis 3, **dadurch gekennzeichnet,** daß, während der Deckel (14) des Mechanismus (11) in Querrichtung eine Randleiste (38) umfaßt, durch die er axial auf dem Schwungrad (13) zur Auflage kommt, sich die an dem besagten Schwungrad (13) angebrachten Lüftungsrippen (58) axial bis in unmittelbare Nähe der besagten Randleiste (38) erstrecken.

5. Kupplungsmodul nach einem der Ansprüche 1 bis 4, **dadurch gekennzeichnet,** daß, während das Schwungrad (13) vorstehend Vorsprünge (39) aufweist, auf denen der Deckel (14) des Mechanismus (11) axial durch eine Randleiste (38) zur Auflage kommt, die an dem besagten Schwungrad (13) angeordneten Lüftungsrippen (58, 58') kreisförmig zwischen den besagten Vorsprüngen (39) angeordnet sind und daß sich die Ansätze (51) der Druckplatte (16) zwischen den Vorsprüngen des Schwungrads erstrecken.

6. Kupplungsmodul nach einem der Ansprüche 1 bis 5, **dadurch gekennzeichnet,** daß sich die am Schwungrad (13) angebrachten Lüftungsrippen (58, 58') alle schräg in der gleichen Richtung im Verhältnis zu einer radialen Ebene erstrecken, die durch ihren mittleren Bereich verläuft.

7. Kupplungsmodul nach einem der Ansprüche 1 bis 6, **dadurch gekennzeichnet,** daß das Schwungrad (13) zwischen den Bohrungen (30), die es zu seiner Befestigung an einer treibenden Welle (32) aufweist, und den Lüftungsrippen (58, 58'), die es trägt, Ausnehmungen (62) enthält.

8. Kupplungsmodul nach Anspruch 7,**dadurch gekennzeichnet,** daß die Ausnehmungen (62) des Schwungrads (13) alle als längliche Aussparung entlang einem gleichen Kreisumfang gestreckt sind.

9. Kupplungsmodul nach einem der Ansprüche 1 bis 8, **dadurch gekennzeichnet,** daß, während der Deckel (14) durch eine Randleiste (38) axial auf dem Schwungrad (13) zur Auflage kommt und die Druckplatte (16) durch Zungen (52) mit dem Deckel (14) verbunden ist, die besagte Randleiste (38) des Deckels (14) um jede der Bohrungen (41) herum, die er für seine Befestigung am Schwungrad (13) aufweist, auf der Seite der Zungen (52) eine Buchse (55) bildet, die in eine Bohrung (56) dieser Zungen (52) eingesetzt ist, um deren Zentrierung und ihre Befestigung herbeizuführen.

10. Kupplungsmodul nach einem der Ansprüche 1 bis 9, **dadurch gekennzeichnet,** daß das Schwungrad (13) mittig mehrere Bohrungen (30) für seine Befestigung an einer treibenden Welle (32) aufweist.

## Claims

1. A clutch module of the kind comprising a mechanism (11), a clutch friction wheel (12) and a flywheel (13), the said mechanism (11) itself comprising a cover plate (14) by which it is attached on the flywheel (13), a diaphragm (15) which bears on the cover plate (14), and a pressure plate (16) on which the diaphragm (15) bears, wherein the pressure plate (16) has radial lugs (51) which are connected by tongues (52) to the cover plate (14), so as to couple it in rotation to the latter while allowing it to undergo a certain axial displacement with respect thereto, characterised in that, in the vicinity of its periphery having the larger diameter, the flywheel (13) carries ventilating fins (58, 58') projecting axially on its surface facing towards the pressure plate (16), in that the ventilating fins (58, 58') extend radially beyond the friction disc (19) of the clutch friction wheel (12), in line with the friction liners (20) of the friction disc (19), and in that the ventilating fins (58) carried by the flywheel (13) are located on a circle on either side of the said lugs (51).

2. A clutch module of the kind comprising a mechanism (11), a clutch friction wheel (12) and a flywheel (13), the said mechanism (11) itself comprising a cover plate (14) by which it is attached on the flywheel (13), a diaphragm (15) which bears on the cover plate (14), and a pressure plate (16) on which the diaphragm (15) bears, wherein the pressure plate (16) has radial lugs (51) which are connected by tongues (52) to the cover plate (14), so as to couple it in rotation to the latter while allowing it to undergo a certain axial displacement with respect thereto, characterised in that, in the vicinity of its periphery having the larger diameter, the flywheel (13) carries ventilating fins (58, 58') projecting axially on its surface facing towards the pressure plate (16), in that the ventilating fins (58, 58') extend radially beyond the friction disc (19) of the clutch friction wheel (12), in line with the friction liners (20) of the friction disc (19), and in that at least one ventilating fin (58') is at least partly located axially in line with at least one of the said lugs (51).

3. A clutch module according to Claim 2, characterised in that the ventilating fin (58') which is located in line with the said lug (51) has a height (H') which is smaller than the height (H) of the other ventilating fins (58), for its insertion under the said lug (51).

4. A clutch module according to any one of Claims 1 to 3, characterised in that, with the cover plate (14) of the mechanism (11) including a transverse flange (38) by which it bears axially on the flywheel (13), the ventilating fins (58) carried by the said flywheel (13) extend axially to the immediate vicinity of the said flange (38).

5. A clutch module according to any one of Claims 1 to 4, characterised in that, with the flywheel (13) having projecting bosses (39) on which the cover plate (14) of the mechanism (11) bears axially through a flange (38), the ventilating fins (58, 58') carried by the said flywheel (13) are located on a circle between the said bosses (39), and in that the lugs (51) of the pressure plate (16) lie between the bosses of the flywheel.

6. A clutch module according to any one of Claims 1 to 5, characterised in that the ventilating fins (58, 58') carried by the flywheel (13) all extend obliquely in the same direction with respect to a radial plane passing through their middle zone.

7. A clutch module according to any one of Claims 1 to 6, characterised in that the flywheel (13) has apertures (62) between the holes (30) with which it is provided for fastening it on a driving shaft (32), and the ventilating fins (58, 58') which it carries.

8. A clutch module according to Claim 7, characterised in that the apertures (62) in the flywheel (13) are all elongated in buttonhole form on a common pitch circle.

9. A clutch module according to any one of Claims 1 to 8, characterised in that, with the cover plate (14) bearing axially on the flywheel (13) through a flange (38), and the pressure plate (16) being connected to the cover plate (14) by means of tongues (52), the said flange (38) of the cover plate (14) defines, around each of the holes (41) with which it is provided for fastening it to the flywheel (13), and on the same side as the tongues (52), a boss (55) which is engaged in an aperture (56) of the said tongues (52), for centring and fastening the latter.

10. A clutch module according to any one of Claims 1 to 9, characterised in that the flywheel (13) has a plurality of central through apertures (30) for fastening it to a driving shaft (32).
